# EUROPÄISCHE PATENTSCHRIFT

(11) **EP 0 458 802 B1**
(45) Veröffentlichungstag und Bekanntmachung des Hinweises auf die Patenterteilung: **18.05.1994**
(21) Anmeldenummer: 90902154.5
(22) Anmeldetag: 02.02.1990
(51) Int. Cl.: G06F 11/00, H04L 1/00

(54) **VERFAHREN ZUM BETRIEB EINES SIGNALTECHNISCH SICHEREN MEHRRECHNERSYSTEMES**
PROCESS FOR OPERATING A FAIL SAFE MULTICOMPUTER SYSTEM
PROCEDE POUR L'EXPLOITATION D'UN SYSTEME MULTICALCULATEUR A SECURITE INTRINSEQUE

(30) Priorität: 16.02.1989 DE 3904747
(43) Veröffentlichungstag der Anmeldung: 04.12.1991
(73) Patentinhaber: SIEMENS AKTIENGESELLSCHAFT, 80333 München (DE)
(72) Erfinder: GEDUHN, Norbert, D-3162 Uetze (DE); SCHMIDT-KANEFENDT, Hans-Heinrich, D-3387 Vienenburg 3 (DE)
(86) Internationale Anmeldenummer: DE9000072
(87) Internationale Veröffentlichungsnummer: WO9009632

(56) Entgegenhaltungen:
- EP-A- 0 214 474
- DE-A- 3 423 217
- DE-A- 3 442 418
- US-A- 3 934 131
- IEEE Transaction on Communications, Band COM-29, Nr. 7, Juli 1981, IEEE, (New York, US), M.C. Easton: "Design choices for selective-repeat retransmission protocols", Seiten 944-953.

## Beschreibung

Die Erfindung bezieht sich auf ein Verfahren nach dem Oberbegriff des Patentanspruches 1. Ein derartiges Verfahren ist aus der DE-OS 34 42 418 bekannt.

Dort prüft der jeweilige Empfangsrechner die ihm zweikanalig übermittelten Datentelegramme auf Übereinstimmung. Beim Feststellen voneinander abweichender Daten in den Ein/Ausgabebaugruppen des Empfangsrechners verwirft dieser die übermittelten Datentelegramme und fordert vom Senderechner eine erneute Telegrammübertragung an. Ist auch diese Telegrammübertragung gestört, so ermittelt der Empfangsrechner anhand von in den Datentelegrammen enthaltenen Prüfdaten den jeweils gestörten Kanal und verkehrt anschließend mit dem Senderechner nur mehr einkanalig über den verbliebenen ungestörten Kanal mit höherredundant gesicherten Datentelegrammen. Das sendeseitige Wiederholen gestört empfangener Datentelegramme ist vom Empfang entsprechender Anforderungssignale durch den jeweiligen Empfangsrechner abhängig gemacht. Ist jedoch der Übertragungsweg zwischen dem Sende- und dem Empfangsrechner gestört oder liegt eine Störung in den Ein/Ausgabebausteinen eines der beiden Rechner vor, so besteht eine große Wahrscheinlichkeit dafür, daß diese Anforderungssignale auf die gleiche Weise gestört werden wie die zuvor übermittelten Datentelegramme. Der jeweilige Senderechner weiß dann nicht Bescheid über das empfangsseitige Verwerfen von Datentelegrammen und über den von der Störung jeweils betroffenen Kanal. Hat die Datenübertragung von nicht höherredundant gesicherten Datentelegrammen auf höherredundant gesicherte Datentelegramme gewechselt, so ist eine selbsttätige Rückkehr in die ursprüngliche Übertragungsart mit nicht höherredundant gesicherten Daten nicht mehr vorgesehen; jede weitere Übertragungsstörung führt zum Abbruch der Datenübertragung.

Aufgabe der Erfindung ist es, ein Verfahren nach dem Oberbegriff des Patentanspruches 1 anzugeben, das das sendeseitige Wiederholen gestört empfangener Datentelegramme unabhängig macht vom Empfang etwaiger Anforderungssignale des durch eins Störung betroffenen Empfangsrechners. Eine vorteilhafte Weiterbildung des Verfahrens Soll es dem jeweiligen Senderechner ermöglichen, auf eine eingetretene Störung flexibel zu reagieren, indem er bei nur sporadischen Störungen nach dem vorübergehenden Übertragen höherredundant gesicherter Datentelegramme selbsttätig wieder in die Übertragungsart mit nicht höherredundant gesicherten Daten zurückkehrt.

Die Erfindung löst diese Aufgabe durch die kennzeichnenden Merkmale des Patentanspruches 1; sie ist nachstehend anhand von in der Zeichnung verdeutlichten Diagrammen erläutert.

Die Zeichnung zeigt:
- in Figur 1: ein Diagramm für das ordnungsgerechte Übertragen und Quittieren von nicht höherredundant gesicherten Daten,
- in Figur 2: ein Diagramm für längerfristig gestörte Datentelegrammübertragung,
- in Figur 3: ein Diagramm für nur sporadisch gestörte Datentelegrammübertragung und
- in Figur 4: ein Diagramm für nur sporadisch gestörte Quittungsmeldungsübertragung.

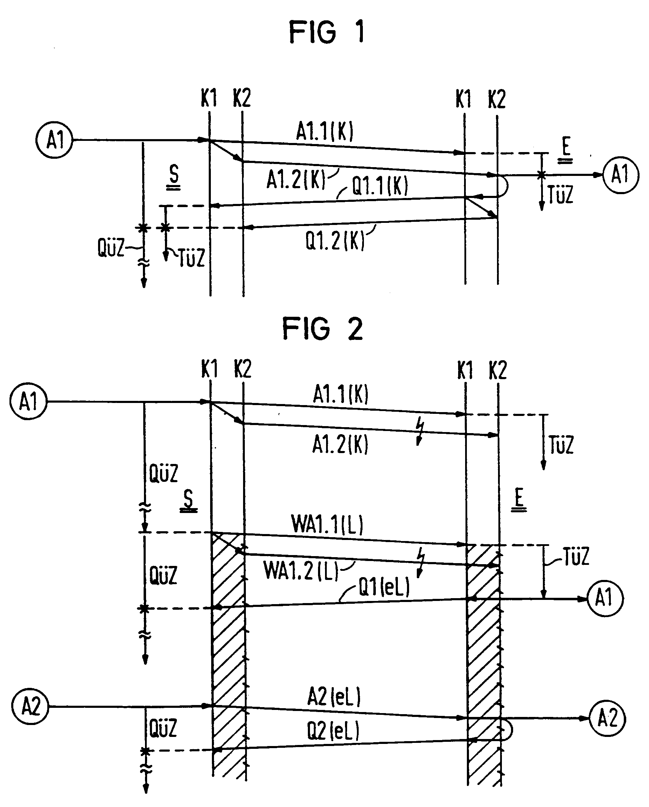

Die Figur 1 zeigt schematisch einen Sender S und einen Empfänger E, von denen jeder durch ein sicheres Rechnersystem dargestellt sein soll und mit dem jeweiligen Partnerrechner über ein Bussystem mit den Kanälen K1 und K2 verbunden ist. Es ist vorgesehen, daß vom Senderechner S ein Telegramm A1 an den Empfangsrechner E zu übertragen ist. Der Senderechner veranlaßt hierzu nach der Adressierung des Empfangsrechners die Ausgabe zweier inhaltsgleicher aber ggf. in unterschiedlicher Form dargestellter Telegramme A1.1(K) und A1.2(K) an den Empfangsrechner. Das in Klammern gesetzte Kennzeichen K bedeutet, daß es sich bei dem betreffenden Datentelegramm um ein nicht höher redundant gesichertes Datentelegramm handeln soll (K=Kurztelegramm).

Die Telegrammübertragung erfolgt zweikanalig mehr oder weniger zeitversetzt auf den beiden Kanälen, wobei die Reihenfolge der Kanalbeschickung beliebig gewählt sein kann. Das erste vom Empfangsrechner empfangene Datentelegramm veranlaßt dort den Start einer Zeitüberwachung TÜZ für einen maximal zulässigen Zeitversatz zwischen den beiden Datentelegrammen des zu übermittelnden Telegrammpaares. Auf die Bedeutung dieser Zeitüberwachung wird später anhand der Figuren 2 bis 4 näher eingegangen; in der Zeichnung ist die Zeitüberwachung durch die zugehörige Überwachungszeit verdeutlicht. Stellt der Empfangsrechner fest, daß er auf beiden Kanälen inhaltlich gleiche Datentelegramme empfangen hat und daß der zeitliche Versatz der beiden Datentelegramme zueinander kleiner ist als der durch die Zeitüberwachung TÜZ vorgegebene Zeitversatz, so wird das über einen der Kanäle übermittelte Datentelegramm A1 in den Empfangsrechner eingegeben und die Zeitüberwachung wird abgebrochen. Mit dem Abbruch der Zeitüberwachung - in der Zeichnung verdeutlicht durch ein Kreuz in der für die Zeitüberwachung zur Verfügung stehenden Zeitspanne - veranlaßt der Empfangsrechner die Ausgabe von Quittungsmeldungen Q1.1(K) und Q1.2(K) über beide Übertragungskanäle an den jeweiligen Senderechner S. Auch dort veranlaßt das zuerst eintreffende Quittungstelegramm Q1.1(K) das Starten einer Zeitüberwachung TÜZ, innerhalb der der Empfang der zweiten Quittungsmeldung Q1.2(K) auf dem jeweils anderen Kanal erwartet wird. Die übermittelten Quittungsmeldungen werden nur dann anerkannt und an den Senderechner ausgegeben, wenn sie inhaltsgleich sind und wenn ihr zeitlicher Versatz kleiner ist als der durch die Zeitüberwachung TÜZ gegebene zulässige maximale zeitliche Versatz der Quittungsmeldungen.

Mit dem Ausgeben des ersten Datentelegrammes A1.1(K) hatte der Senderechner S eine Quittungszeitüberwachung QÜZ gestartet für eine maximal zulässige Zeit zwischen dem Beginn der Datentelegrammübertragung und der ordnungsgerechten Quittierung dieses Telegramms durch den Empfangsrechner. Die von der Quittungszeitüberwachung QÜZ vorgegebene maximale Zeitdauer zum Empfang von Quittungsmeldungen ist mindestens ebenso lang wie die Telegrammdauer, die von der Zeitüberwachung TÜZ für die maximal zulässige Folgezeit der Datentelegramme eines Telegrammpaares und der Quittungsmeldungen eines Quittungspaares vorgegebene Zeitdauer und die doppelte Laufzeit der Datentelegramme zwischen Sende- und Empfangsrechner. Auf die Bedeutung der Quittungszeitüberwachung QÜZ wird nachfolgend anhand der Figuren 2 bis 4 näher eingegangen. Mit dem Anerkennen einer zur ersten Quittungsmeldung Q1.1(K) inhaltsgleichen zweiten Quittungsmeldung Q1.2(K) innerhalb der Telegrammüberwachungszeit TÜZ und der Quittungsüberwachungszeit QÜZ, verdeutlicht durch Kreuze in den aufgetragenen Überwachungszeiten, ist die Datenübertragungsprozedur zwischen Sende- und Empfangsrechner beendet und die Kanäle K1 und K2 sind frei zum Übertragen eines weiteren Datentelegrammpaares vom Sende- zum Empfangsrechner.

Bei dem in Figur 2 dargestellten Diagramm ist wiederum angenommen, daß ein Datentelegramm A1 vom Senderechner S an den Empfangsrechner E übertragen werden soll. Die Übertragung erfolgt dabei zweikanalig mittels nicht höherredundant gesicherter Datentelegramme A1.1(K) und A1.2(K). Während das über den Kanal K1 übertragene Datentelegramm A1.1(K) vom Empfangsrechner E ordnungsgerecht empfangen wird, soll das andere Datentelegramm A1.2(K) mit einer Störung behaftet sein. Diese Störung kann ihre Ursache in einer Übertragungsstörung oder in einem Fehlverhalten der sende- oder empfangsseitigen Ein/Ausgabebaugruppen haben, über die die zu übertragenden Daten ausgegeben bzw. empfangen werden. Mit dem Eintreffen des ersten als ordnungsgerecht erkannten Datentelegrammes A1.1(K) hat der Empfangsrechner die Zeitüberwachung TÜZ für die maximal zulässige Folgezeit zwischen den beiden Datentelegrammen des erwarteten Telegrammpaares gestartet. Annahmegemäß läuft die Zeitüberwachung ab, ohne daß das erste übermittelte Datentelegramm durch ein inhaltsgleiches zweites Datentelegramm bestätigt wird. Mit dem Ablauf der Telegrammüberwachungszeit TÜZ verwirft der Empfangsrechner das als ordnungsgerecht erkannte Datentelegramm A1.1(K).

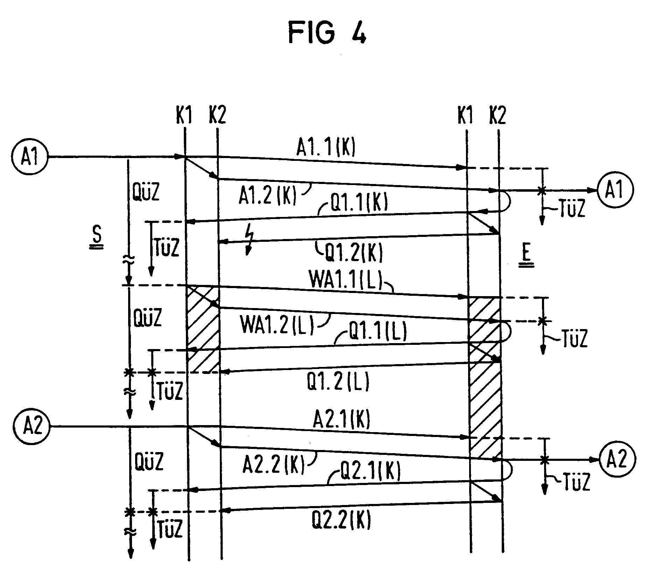

Sendeseitig war beim Ausgeben des ersten Datentelegrammes die Quittungszeitüberwachung QÜZ gestartet worden, über die das zeitgerechte Einlaufen von Quittungsmeldungen überwacht werden sollte. Wegen der eingetretenen Störung läuft die Quittungszeitüberwachung QÜZ ab, ohne daß Quittungsmeldungen empfangen werden. Mit dem Ablauf der Quittungsüberwachungszeit weiß die Sendeseite, daß die Übertragung nicht ordnungsgemäß abgelaufen ist und sie veranlaßt daraufhin die Wiederholung dieser Datentelegramme in höherredundant gesicherter Form. Hierunter ist vorzugsweise eine zweimalige Datenübertragung in unmittelbarer Folge zu verstehen, wobei das hintere Telegrammteil das vordere Telegrammteil in invertierter Form darstellt. Den Telegrammwiederholungen ist eine besondere Kennung beigegeben, die empfangsseitig eine Unterscheidung zu den originären Telegrammen ermöglicht; hierauf wird später anhand der Fig. 4 näher eingegangen. In der Zeichnung verdeutlicht eine Schraffur zwischen den beiden Kanälen K1 und K2 den Zeitraum, in dem die Datenübertagung mindestens zwischen den durch die Störung direkt betroffenen Sende- und Empfangsrechnern ausschließlich mittels höherredundant gesicherter Daten erfolgt; der jeweils durch die Störung betroffene Kanal ist durch Striche gekennzeichnet.

Es ist angenommen, daß das über den Kanal K1 übertragene Datentelegramm WA1.1(L) (W=Wiederholung, L=Langtelegramm) den Empfangsrechner E erreicht, während das über den als gestört angenommenen Kanal K2 übertragene Datentelegramm nur verstümmelt oder überhaupt nicht empfangen wird. Mit dem Ablauf der durch das erste Datentelegramm gestarteten Telegrammüberwachungszeit TÜZ weiß der Empfänger, daß er mit dem Eintreffen eines zweiten inhaltsgleichen Datentelegrammes nicht mehr zu rechnen hat. Er prüft nun, ob das von ihm empfangene höher redundant gesicherte Datentelegramm WA1.1(L) den vereinbarten Prüfbedingungen genügt und ob es auf dem gleichen Kanal K1 empfangen wurde wie das zuvor übermittelte nicht höherredundant gesicherte Datentelegramm WA1.1 (K). Sind diese beiden Bedingungen erfüllt, so übernimmt er das Datentelegramm A1 in seinem Arbeitsspeicher und veranlaßt die Ausgabe einer höherredundant gesicherten Quittungsmeldung Q1(eL) (el=einkanalig, Langtelegramm) auf demjenigen Kanal K1, über den das höherredundant gesicherte Datentelegramm empfangen wurde. Das Empfangen dieses höherredundant gesicherten Quittungssignales durch den Senderechner führt dort zum Abbruch der Quittungszeitüberwachung QÜZ, die mit dem Ausgeben des ersten höherredundant gesicherten Datentelegrammes WA1.1(L) gestartet worden war. Mit dem Abbruch der Quittungszeitüberwachung ist die weitere Datenübertragung zwischen beliebigen Sende- und Empfangsrechnern des über die Kanäle K1 und K2 kommunizierenden Mehrrechnersystemes wieder freigegeben. Die in den zuvor erläuterten Übertragungsvorgang einbezogenen Sende- und Empfangsrechner verkehren ab jetzt untereinander und ggf. auch mit den übrigen Rechnern des Rechnersystemes nur mehr einkanalig mittels höherredundant gesicherter Daten auf dem als ungestört erkannten Kanal K1.

Zu einem späteren Zeitpunkt soll der Senderechner S ein Datentelegramm A2 an den Empfangsrechner E übermitteln. Dies geschieht durch Aufschalten eines höherredundant gesicherten Datentelegrammes A2(eL) auf den Kanal K1. Bei ordnungsgerechtem Empfang dieses höherredundant gesicherten Datentelegrammes wird es vom Empfangsrechner E übernommen und durch eine ebenfalls höherredundant gesicherte Quittungsmeldung Q2(eL) quittiert. Das zeitgerechte Eintreffen dieser Quittungsmeldung wird vom Senderechner durch die Quittungszeitüberwachung QÜZ überwacht. Diese Quittungszeitüberwachung bei einkanaliger Übertragung von Datentelegrammen und Quittungsmeldungen kann kürzer bemessen sein als die bei zweikanaliger Übertragung. Die dem Datentelegramm und der Quittungsmeldung bei gegebenen Kennzeichen eL unterrichten den jeweiligen Empfänger davon, daß es sich bei diesem Telegramm oder dieser Meldung um einkanalig übertragene höherredundant gesicherte Daten handelt, bei denen auf das Eintreffen eines zweiten Datentelegrammes oder einer zweiten Quittungsmeldung nicht zu warten ist. Aus diesem Grunde ist weder sende- noch empfangsseitig eine Telegrammzeitüberwachung vorgesehen.

Wird ein Datentelegramm bei einkanaliger höherredundant gesicherter Datenübertragung verfälscht empfangen, so ist dies empfangsseitig anhand der den zu übertragenden Nutzdaten beigegebenen Prüfdaten erkennbar; die übermittelten Daten werden verworfen. Die bleibende Unterbrechung des Datenverkehrs zwischen den beiden miteinander kummunizierenden Rechnern ist vorteilhaft davon abhängig zu machen, daß zuvor ein erneuter, ebenfalls negativ verlaufender Versuch zur Datenübertragung stattgefunden hat. Die Wiederholung der Daten wird sendeseitig mit dem Ablauf der mit der erstmaligen Übertragung der Daten gestarteten Quittungsüberwachungszeit veranlaßt.

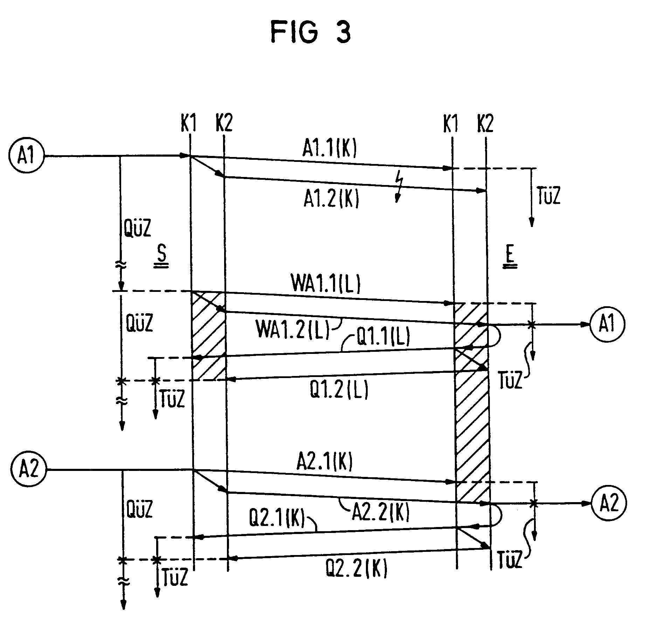

Bei dem Schaubild der Figur 3 ist wiederum angenommen, daß eines der beiden vom Senderechner S zum Empfangsrechner E übermittelten Datentelegramme von diesem nur unvollständig oder überhaupt nicht empfangen wurde. Die mit dem Eintreffen des als ordnungsgerecht erkannten Datentelegrammes A1.1(K) gestartete Telegrammüberwachungszeit TÜZ läuft ab, wobei das übermittelte Datentelegramm empfangsseitig verworfen wird. Mit dem Ablauf der Quittungsüberwachungszeit QÜZ veranlaßt der Senderechner S die Wiederholung der zuvor ausgegebenen Datentelegramme in höherredundant gesicherter Form. Dabei ist angenommen, daß sowohl das über den Kanal K1 übertragene Datentelegramm WA1.1(L) als auch das über den Kanal K2 übertragene Datentelegramm WA1.2(L) vom Empfangsrechner ordnungsgerecht empfangen werden, weil es sich bei der die Wiederholung veranlassenden Störung annahmegemäß lediglich um eine sporadische Störung gehandelt haben soll. Mit dem Empfangen inhaltsgleicher höherredundant gesicherter Datentelegramme auf beiden Kanälen wird die mit dem Empfang des ersten Datentelegrammes gestartete Telegrammzeitüberwachung TÜZ abgebrochen und das übermittelte Datentelegramm A1 in den Empfangsrechner übernommen. Der Empfangsrechner veranlaßt auf den zweikanaligen Empfang höherredundanter Datentelegramme die Ausgabe höherredundant gesicherter Quittungsmeldungen Q1.1(L), Q1.2(L) auf beide Kanäle K1 und K2. Ist der zeitliche Versatz zwischen diesen Quittungsmeldungen kleiner als der für Quittungsmeldepaare zulässige Versatz und treffen die Quittungsmeldungen innerhalb der mit dem Ausgeben der höherredundant gesicherten Datentelegramme gestarteten Quittungsüberwachungszeit QÜZ ein, so erkennt der Senderechner hieraus das ordnungsgerechte Übertragen von Datentelegrammen und Quittungsmeldungen über beide Kanäle. Bei der vorher eingetretenen Störung muß es sich daher um eine sporadische Störung gehandelt haben, die den bleibenden Übergang auf einkanalig übermittelte höherredundant gesicherte Daten und Telegramme nicht rechtfertigt. Der Senderechner schaltet daher für den weiteren Datenverkehr mit dem Empfangsrechner wieder auf zweikanalige nicht höherredundant gesicherte Datenübertragung zurück.

Soll zu einem späteren Zeitpunkt ein Datentelegramm A2 an den Empfangsrechner übertragen werden, so veranlaßt der Senderechner das Aufschalten entsprechender nicht höherredundant gesicherter Datentelegramme A2.1(K) und A2.2(K) auf die beiden Kanäle K1 und K2. Aus dem Empfang dieser beiden Datentelegramme erkennt der Empfangsrechner, daß der Senderechner wieder in den nicht höherredundant gesicherten Datenverkehr gewechselt hat und schaltet seinerseits ebenfalls in den nicht höher redundant gesicherten Datenverkehr um. Mit dem Empfang übereinstimmender Datentelegramme auf beiden Kanälen wird die zuvor eingeleitete Telegrammzeitüberwachung abgebrochen und die Übernahme des Datentelegrammes A2 in den Rechner veranlaßt. Die Übernahme des Datentelegrammes A2 in den Rechner E bewirkt die Ausgabe von nicht höherredundant gesicherten Quittungsmeldungen Q2.1(K) und Q2.2(K) auf die beiden Kanäle K1 und K2. Die Übertragung des Datentelegrammes A2 ist beendet, wenn der zeitliche Versatz der beiden beim Senderechner eintreffenden Quittungsmeldungen Q2.1(K) und Q2.2(K) kleiner ist als der durch die Telegrammzeitüberwachung TÜZ vorgegebene Wert und wenn die beiden Quittungsmeldungen innerhalb der durch die Quittungszeitüberwachung QÜZ vorgegebenen Zeitspanne beim Sender eintreffen.

Bei dem in Figur 4 dargestellten Diagramm ist angenommen, daß nicht die Telegrammübertragung, sondern die Übertragung einer Quittungsmeldung sporadisch gestört ist. Der Senderechner S hat zum Übertragen eines Datentelegrammes A1 zwei inhaltlich übereinstimmende Datentelegramme A1.2(K) und A1.2(K) auf die beiden Kanäle K1 und K2 aufgeschaltet. Empfangsseitig führen diese Datentelegramme zum Abbruch der Telegrammüberwachungszeit TÜZ und zur Übernahme des Datentelegrammes A1 in den Empfangsrechner E. Dieser veranlaßt daraufhin die Aufschaltung von nicht höherredundant gesicherten Quittungsmeldungen Q1.1(K) und Q1.2(K) auf die beiden Kanäle K1 und K2. Dabei soll die auf den Kanal K2 aufgeschaltete Quittungsmeldung Q1.2(K) sendeseitig nur gestört oder überhaupt nicht empfangen werden. Als Folge hiervon läuft die sendeseitige Telegrammüberwachungszeit TÜZ ab mit der Folge, daß die empfangene Quittungsmeldung Q1.1(K) verworfen wird; anschließend läuft auch die Quittungszeitüberwachung QÜZ ab. Der Senderechner S weiß nun um das Vorhandensein einer Störung; er weiß jedoch nicht, wo diese Störung aufgetreten ist und ob sie nur vorübergehender Natur ist oder länger andauert. Mit dem Ablaufen der Quittungsüberwachungszeit veranlaßt der Senderechner die Wiederholung des zur Übertragung anstehenden Datentelegrammes A1 in höherredundant gesicherter Form durch Aufschalten eines höherredundant gesicherten Datentelegrammes WA1.1(L) auf den Kanal K1 und eines entsprechenden Datentelegrammes WA1.2(L) auf den Kanal K2. Mit dem Eintreffen des zweiten Datentelegrammes beim Empfangsrechner wird die dort mit dem Eintreffen des ersten Datentelegrammes gestartete Telegrammzeitüberwachung TÜZ abgebrochen. Der Empfangsrechner erkennt anhand der den beiden Telegrammen beigegebenen besonderen Kennung, daß es sich bei diesen Telegrammen um die Wiederholung derjenigen Telegramme handelt, die zuvor zur Übernahme des Telegrammes A1 in den Rechner geführt haben. Der Rechner ignoriert daraufhin die ihm neuerlich übermittelten Datentelegramme und veranlaßt die Ausgabe von höherredundant gesicherten Quittungsmeldungen Q1.1(L) und Q1.2(L) auf die beiden Kanäle K1 und K2. Aus dem zeitgerechten Eintreffen von Quittungsmeldungen über beide Kanäle erkennt der Senderechner, daß weiterhin eine zweikanalige Datenübertragung zum Empfangsrechner hin möglich ist. Er wechselt daraufhin aus dem Zustand höherredundanter Datenübertragung in den Zustand nicht höherredundanter Datenübertragung.

Zu einem späteren Zeitpunkt soll der Senderechner ein Datentelegramm A2 an den Empfangsrechner übermitteln. Dies geschieht mittels zweier nicht höherredundant gesicherter Datentelegramme A2.1(K) und A2.2(K), deren Empfang durch den Empfangsrechner dazu führt, daß der Empfangsrechner wieder in den Übertragungszustand für nicht höher redundant gesicherte Daten zurückschaltet. Der Empfangsrechner übernimmt das übermittelte Datentelegramm A2 und veranlaßt die Quittung dieses Datentelegrammes mittels zweier nicht höherredundant gesicherter Quittungsmeldungen Q2.1(K) und Q2.2(K) auf den beiden Kanälen. Mit dem Eintreffen dieser beiden Quittungsmeldungen innerhalb der Quittungsüberwachungszeit QÜZ mit einem zeitlichen Versatz, der geringer ist als die durch die Telegrammzeitüberwachung TÜZ vorgegebene Zeitspanne, ist der Übertragungsvorgang für das Datentelegramm A2 beendet und die Kanäle K1 und K2 sind frei zur Übertragung weiterer Daten.

In der gleichen Weise wie bei einer dauerhaften Störung in Senderichtung wird auch bei einer länger anhaltenden Störung des Quittungsweges auf einkanlige höherredundant gesicherte Daten- und Quittungsmeldungsübertragung umgeschaltet. Tritt während der höherredundanten Datenübertragung eine Störung auf, so wird der weitere Datenverkehr mindestens zwischen den durch die Störung direkt betroffenen Rechnern abgebrochen; gegebenenfalls wird zuvor noch einmal der Versuch einer ordungsgerechten Datenübertagungen mit höherredundanten gesicherten Daten unternommen.

## Patentansprüche

1. Verfahren zum Betrieb eines signaltechnisch sicheren Mehrrechnersystems mit mindestens zwei Rechnern, die über zwei voneinander unabhängige Kanäle kommunizieren und dabei über beide Kanäle Telegrammpaare mit inhaltsgleichen Datentelegrammen vom jeweiligen Senderechner zum jeweiligen Empfangsrechner übertragen, der die übermittelten Datentelegramme auf Übereinstimmung prüft, bei fehlender Übereinstimmung den jeweils gestörten Kanal lokalisiert und den Datenverkehr mindestens mit dem Senderechner, von dem die gestörten Daten stammen, für eine begrenzte maximale Zeitspanne über den noch verbleibenden ungestörten Kanal einkanalig mit höherredundant gesicherten Datentelegrammen betreibt,
**dadurch gekennzeichnet**,
daß der jeweilige Empfangsrechner (E) dem Senderechner (S) die Übernahme eines Datentelegrammes (A1.1(K), A1.2(K)) durch eine Quittungsmeldung (Q1.1(K), Q1.2(K)) anzeigt, die abhängig davon, ob das Datentelegramm einkanalig oder zweikanalig empfangen wurde, ebenfalls einkanalig als Einzelquittungsmeldung (Q1(eL)) oder zweikanalig als Quittungsmeldungen (Q1.1(K), Q1.2(K) eines Quittungsmeldepaares an den Senderechner übertragen wird, wobei die Quittungsmeldung (Q1.1(K), Q1.2(K); Q1(eL)) in gleicher Weise gesichert ist wie das zugehörige Datentelegramm (A1.1(K), A1.2(K); WA1.1(L), WA1.2(L)) und über den gleichen Kanal (K1) wie dieses bzw. beide Kanäle (K1, K2) übertragen wird, daß das jeweils erste sendeseitig ausgegebene Datentelegramm (A1.1(K); WA1.1(L)) jedes Telegrammpaares (A1.1(K), A1.2(K); WA1.1(L), WA1.2(L)) auf der Sendeseite eine Zeitüberwachung (QÜZ) für eine maximal zulässige Zeitspanne zum Empfang der Quittungsmeldung (Q1.1(K), Q1.2(K); Q1(eL)) anstößt, die beim Nichteintreffen der Quittungsmeldung mit ihrem Ablauf die zweikanalige Wiederholung des gestörten Telegrammpaares (WA1.1(L), WA1.2 (L)) in höherredundant gesicherter Form veranlaßt, sofern es sich bei dem zuvor ausgegebenen Telegrammpaar um ein nicht höherredundant gesichertes Telegrammpaar (A1.1(K), A1.2(K)) handelt, dagegen den weiteren Datenverkehr mindestens mit dem jeweiligen Empfangsrechner abbricht, sofern es sich bei dem zuvor ausgegebenen Telegramm oder Telegrammpaar um ein höherredundant gesichertes Telegramm oder Telegrammpaar handelt.

2. Verfahren nach Anspruch 1, **dadurch gekennzeichnet,** daß der Abbruch des Datenverkehrs von einem erneuten ebenfalls negativ verlaufenden Versuch zur Datenübertragung abhängig gemacht ist.

3. Verfahren nach Anspruch 1, **dadurch gekennzeichnet,** daß das jeweils erste empfangsseitig als ordnungsgerecht erkannte Datentelegramm (A1.1(K); WA1.1(L)) jedes Telegrammpaares (A1.1(K), A1.2(K); WA1.1(L), WA1.2(L)) auf der Empfangsseite eine Zeitüberwachung (TÜZ) für eine maximal zulässige Folgezeit zwischen den beiden Datentelegrammen eines Telegrammpaares anstößt, welche die Anerkennung und Übernahme des Datentelegrammes (A1.1(K), A1.2(K); WA1.1(L), WA1.2(L)) in den Empfangsrechner (E) und die Ausgabe einer Quittungsmeldung (Q1.1(K), Q1.2(K); Q1(eL)) an den Senderechner abhängig macht vom Erkennen eines zweiten inhaltsgleichen Datentelegrammes (A1.2(K); WA1.2(L)) auf dem jeweils anderen Kanal (K2) innerhalb der Überwachungszeit TÜZ.

4. Verfahren nach Anspruch 1 und 2, **dadurch gekennzeichnet,** daß der Senderechner (S) beim Empfang inhaltsgleicher höherredundant gesicherter Quittungsmeldungen (Q1.1(L), Q1.2(L)) auf beiden Kanälen (K1, K2) im Verkehr mindestens mit dem diese Quittungsmeldungen absetzenden Empfangsrechner (E) wieder auf den nicht höherredundant gesicherten Datenverkehr zurückschaltet.

5. Verfahren nach Anspruch 1, **dadurch gekennzeichnet,** daß der Empfangsrechner (E) beim Empfang inhaltsgleicher höherredundant gesicherte Datentelegramme (WA1.1(L), WA1.2(L)) auf beiden Kanälen die zweikanalige Quittung dieser Datentelegramme an den Senderechner (S) veranlaßt, die Übernahme der Datentelegramme nach ihrer Bewertung jedoch verhindert, sofern diese Datentelegramme inhaltlich mit den zuvor übermittelten nicht höherredundant gesicherten Datentelegrammen (A1.1(K), A1.2(K)) übereinstimmen.

6. Verfahren nach Anspruch 5, **dadurch gekennzeichnet,** daß den im Anschluß an nicht höherredundant gesicherten Datentelegrammen (A1.1(K), A1.2(K)) übertragenen, inhaltlich mit diesen übereinstimmenden höherredundant gesicherten Datentelegrammen (WA1.1(L), WA1.2(L)) eine Kennung beigegeben ist, die sie empfangsseitig unterscheidbar macht von den zuvor übertragenen inhaltsgleichen Datentelegrammen (A1.1(K), A1.2(K)).

7. Verfahren nach Anspruch 1 und 3, **dadurch gekennzeichnet,** daß der Empfangsrechner (E) beim zweikanaligen Empfang inhaltsgleicher nicht höherredundant gesicherter Datentelegramme (A2.1(K), A2.2(K)) nach vorherigem zweikanaligen Empfang inhaltsgleicher höherredundant gesicherter Datentelegramme (WA1.1(L), WA1.2(L)) wieder auf den nicht höherredundant gesicherten Datenverkehr zurückschaltet und dem Senderechner (S) die Übernahme der Datentelegramme mit nicht höherredundant gesicherten Quittungsmeldungen (Q2.1(K), Q2.2(K)) auf beiden Kanälen (K1, K2) anzeigt.

8. Verfahren nach Anspruch 1, **dadurch gekennzeichnet,** daß das jeweils erste empfangsseitig als ordnungsgerecht erkannte Datentelegramm (A1.1(K); WA1.1(L)) jedes Telegrammpaares (A1.1(K), A1.2(K); WA1.1(L), WA1.2(L)) auf der Empfangsseite eine Zeitüberwachung (TÜZ) für eine maximal zulässige Folgezeit zwischen den beiden Datentelegrammen eines Telegrammpaares anstößt, die beim ausschließlichen Empfang eines höherredundant gesicherten Datentelegrammes (WA1.1(L)) im Anschluß an den Empfang eines inhaltlich übereinstimmenden nicht höherredundant gesicherten Datentelegrammes (A1.1(K)) auf dem gleichen Kanal (K1), über den zuvor dieses Datentelegramm (A1.1(K)) übertragen wurde, mit ihrem Ablauf die Anerkennung und Übernahme des höherredundant gesicherten Datentelegrammes (WA1.1(L)) bei Einhaltung der vorgegebenen Prüfbedingungen in den Empfangsrechner (E) und die Ausgabe einer Quittungsmeldung (Q1(eL)) auf dem als ungestört erkannten Kanal (K1) an den Senderechner (S) veranlaßt.

9. Verfahren nach Anspruch 1, **dadurch gekennzeichnet,** daß die jeweils erste sendeseitig als ordnungsgerecht erkannte Quittungsmeldung (Q1.1(K)) jedes Quittungsmeldepaares (Q1.1(K), Q1.2(K)) auf der Sendeseite eine Zeitüberwachung (TÜZ) für eine maximal zulässige Folgezeit zwischen den beiden Quittungsmeldungen jedes Quittungsmeldepaares anstößt, welche die Anerkennung der Quittungsmeldung vom Empfang einer zweiten inhaltsgleichen Quittungsmeldung (Q1.2(K)) auf dem jeweils anderen Kanal (K2) innerhalb der Überwachungszeit abhängig macht.

10. Verfahren nach Anspruch 1, 3 oder 6, **dadurch gekennzeichnet,** daß die von der Zeitüberwachung (QÜZ) vorgegebene maximale Zeitdauer zum Empfang einer bzw. zweier Quittungsmeldungen (Q1.1(K), Q1.2(K); Q1(eL)) mindestens ebenso lang ist wie die Telegrammzeit, die von der Zeitüberwachung (TÜZ) für die maximal zulässige Folgezeit zweier Datentelegramme (A1.1(K), A1.2(K); WA1.1(L), WA1.2(L)) eines Telegrammpaares und zweier Quittungsmeldungen eines Quittungsmeldepaares vorgegebene Zeitdauer und die doppelte Laufzeit der Telegramme zwischen Sende- und Empfangsrechner.

## Claims

1. Process for operating a fail-safe multicomputer system having at least two computers which communicate via two mutually independent channels and which transmit thereby via both channels telegram pairs having content-identical data telegrams from the respective transmitting computer to the respective receiving computer, which checks that the data telegrams transferred match, locates the respective disturbed channel if they do not match, and conducts the data traffic with higher-redundancy protected data telegrams on one channel at least with the transmitting computer from which the corrupted data originate via the remaining undisturbed channel for a limited maximum period of time, characterized in that the respective receiving computer (E) notifies the transmitting computer (S) that it has accepted a data telegram (A1.1(K), A1.2(K)) by means of an acknowledgement message (Q1.1(K), Q1.2(K)) which, depending on whether the data telegram was received on one channel or on two channels, is likewise transmitted to the transmitting computer as a single acknowledgement message (Q1(eL)) on one channel or as acknowledgement messages (Q1.1(K), Q1.2(K)) of an acknowledgement message pair on two channels, the acknowledgement message (Q1.1(K), Q1.2(K); Q1(eL)) being protected in the same way as the associated data telegram (A1.1(K), A1.2(K); WA1.1(L), WA1.2(L)) and being transmitted via the same channel (K1) as it or via both channels (K1, K2) respectively, in that the respective first data telegram (A1.1(K); WA1.1(L)) of each telegram pair (A1.1(K), A1.2(K); WA1.1(L), WA1.2(L)) output at the transmitting end activates a timer (QÜZ) at the transmitting end for a maximum permissible period of time for receiving the acknowledgement message (Q1.1(K), Q1.2(K); Q1(eL)) which, if the acknowledgement message does not arrive by the expiry time, initiates the retransmission of the disturbed telegram pair (WA1.1(L), WA1.2(L)) in a form protected by higher redundancy on two channels if the previously output telegram pair was not a higher-redundancy protected telegram pair (A1.1(K), A1.2(K)), otherwise terminates the further data traffic at least with the respective receiving computer if the previously output telegram or telegram pair was a higher-redundancy protected telegram or telegram pair.

2. Process according to Claim 1, characterized in that the termination of the data traffic is made dependent on a renewed attempt at data transmission that likewise has a negative result.

3. Process according to Claim 1, characterized in that the respective first data telegram (A1.1(K); WA1.1(L)) of each telegram pair (A1.1(K), A1.2(K); WA1.1(L), WA1.2(L)) detected as being correct at the receiving end activates a timer (TÜZ) at the receiving end for a maximum permissible interval between the two data telegrams of a telegram pair, which makes the recognition and acceptance of the data telegram (A1.1(K), A1.2(K); WA1.1(L), WA1.2(L)) in the receiving computer (E) and the output of an acknowledgement message (Q1.1(K), Q1.2(K); Q1(eL)) to the transmitting computer dependent on the detection of a second content-identical data telegram (A1.2(K); WA1.2(L)) on the respective other channel (K2) within the monitoring period TÜZ.

4. Process according to Claim 1 and 2, characterized in that when it receives content-identical higher-redundancy protected acknowledgement messages (Q1.1(L), Q1.2(L)) on both channels (K1, K2), the transmitting computer (S) switches back to the non-higher-redundancy protected data traffic at least with the receiving computer (E) issuing said acknowledgement messages.

5. Process according to Claim 1, characterized in that when it receives content-identical higher-redundancy protected data telegrams (WA1.1(L), WA1.2(L)) on both channels, the receiving computer (E) initiates the acknowledgement of said data telegrams to the transmitting computer (S) on both channels but prevents the acceptance of the data telegrams after their evaluation if the contents of said data telegrams match those of the previously transferred non-higher-redundancy protected data telegrams (A1.1(K), A1.2(K)).

6. Process according to Claim 5, characterized in that an identifier is appended to the higher-redundancy protected data telegrams (WA1.1(L), WA1.2(L)) which were transmitted following non-higher-redundancy protected data telegrams (A1.1(K), A1.2(K)) and which have the same contents as the latter, which identifier makes it possible to distinguish at the receiving end said higher-redundancy protected data telegrams from the previously transmitted content-identical data telegrams (A1.1(K), A1.2(K)).

7. Process according to Claim 1 and 3, characterized in that when it receives content-identical non-higher-redundancy protected data telegrams (A2.1(K), A2.2(K)) on two channels after previously receiving content-identical higher-redundancy protected data telegrams (WA1.1(L), WA1.2(L)) on two channels, the receiving computer (E) switches back to the non-higher-redundancy protected data traffic and notifies the transmitting computer (S) of the acceptance of the data telegrams with non-higher-redundancy protected acknowledgement messages (Q2.1(K), Q2.2(K)) on both channels (K1, K2).

8. Process according to Claim 1, characterized in that the respective first data telegram (A1.1(K); WA1.1(L)) of each telegram pair (A1.1(K), A1.2(K); WA1.1(L), WA1.2(L)) detected as being correct at the receiving end activates a timer (TÜZ) at the receiving end for a maximum permissible interval between the two data telegrams of a telegram pair, which timer, upon its expiry, in the case of the reception of only a higher-redundancy protected data telegram (WA1.1(L)) following the reception of a non-higher-redundancy protected data telegram (A1.1(K)) with matching contents on the same channel (K1) via which said data telegram (A1.1(K)) was previously transmitted, initiates the recognition and acceptance of the higher-redundancy protected data telegram (WA1.1(L)) in the receiving computer (E) given compliance with the predetermined test conditions and the output of an acknowledgement message (Q1(eL)) to the transmitting computer (S) on the channel (K1) detected as being undisturbed.

9. Process according to Claim 1, characterized in that the respective first acknowledgement message (Q1.1(K)) of each acknowledgement message pair (Q1.1(K), Q1.2(K)) detected as being correct at the transmitting end activates a timer (TÜZ) at the transmitting end for a maximum permissible interval between the two acknowledgement messages of each acknowledgement message pair, which makes the recognition of the acknowledgement message dependent on the reception of a second content-identical acknowledgement message (Q1.2(K)) on the respective other channel (K2) within the monitoring period.

10. Process according to Claim 1, 3 or 6, characterized in that the maximum period of time for receiving one or two acknowledgement message(s) (Q1.1(K), Q1.2(K); Q1(eL)) predetermined by the timer (QÜZ) is at least as long as the telegram time, the period of time predetermined by the timer (TÜZ) for the maximum permissible interval between two data telegrams (A1.1(K), A1.2(K); WA1.1(L), WA1.2(L)) of a telegram pair and two acknowledgement messages of an acknowledgement message pair, and twice the transit time of the telegrams between transmitting and receiving computer.

## Revendications

1. Procédé d'exploitation d'un système à calculateurs ou ordinateurs multiples, sûr du point de vue de la technique des signaux, comportant au moins deux calculateurs qui communiquent par l'intermédiaire de deux canaux indépendants et qui transmettent, par l'intermédiaire des deux canaux, des couples de télégrammes comprenant des télégrammes de données ayant un même contenu, d'un calculateur d'émission au calculateur de réception, qui vérifie si la coïncidence entre les télégrammes de données transmis, localise le canal perturbé dans le cas où il n'y a pas coïncidence, et exécute le trafic de données au moins avec le calculateur d'émission à partir duquel proviennent les données perturbées, pendant un intervalle de temps maximum limité, au moyen d'un seul canal, qui est le canal non perturbé qui subsite, avec des télégrammes de données protégées par une redondance d'ordre supérieur,
caractérisé par le fait que le calculateur de réception concerné (E) indique au calculateur d'émission (S) la prise en charge d'un télégramme de données (A1.1(K), A1.2(K)), au moyen d'une signalisation d'accusé de réception (Q1.1(K), Q1.2(K)), qui, en fonction du fait que le télégramme de données a été reçu par un canal ou par deux canaux, est également transmis au moyen d'un canal en tant que signalisation d'accusé de réception individuelle (Q1(eL)) ou dans deux canaux en tant que signalisation d'accusé de réception (Q1.1(K), Q1.2(K)) d'un couple de signalisations d'accusé de réception au calculateur d'émission, la signalisation d'accusé de réception (Q1.1(K), Q1.2(K); Q1(eL)) étant protégée de la même manière que le télégramme associé de données (A1.1(K), A1.2K(K); WA1.1(L),WA1.2(L)) et étant transmis par le même canal (K1), que ce ou ces canaux (K1,K2), que le premier télégramme de données (A1.1(K);WA1.1(L)), émis côté émission, de chaque couple de télégrammes (A1.1(K), A1.2(K); WA1.1(L), WA1.2(L)) déclenche, côté émission, un contrôle de temps (QUZ) durant un intervalle de temps maximum admissible pour la réception de la signalisation de l'accusé de réception (Q1.1(K), Q1.2(K); Q1(eL)), contrôle qui, lors de son exécution, et alors qu'aucune signalisation d'accusé de réception n'arrive, déclenche la répétition, dans les deux canaux, du couple de télégrammes perturbé WA1.1(L),WA1.2(L)) sous une forme protégée par une redondance d'ordre supérieur, dans la mesure où, en ce qui concerne le couple de télégrammes émis auparavant, il s'agit d'un couple de télégrammes (A1.1(K),A1.2(K)), qui n'est pas protégé par une redondance d'ordre supérieur , tandis qu'il interrompt la poursuite du trafic des données au moins avec le calculateur de réception, dans la mesure où, en ce qui concerne le télégramme ou le couple de télégrammes émis auparavant, il s'agit d'un télégramme ou d'un couple de télégrammes protégés par une redondance d'ordre supérieur.

2. Procédé suivant la revendication 1, caractérisé par le fait que l'interruption du trafic des données est rendu dépendant d'une tentative réitérée, de la transmission de données, qui se deroule également avec un résultat négatif.

3. Procédé suivant la revendication 1, caractérisé par le fait que le premier télégramme de données (A1.1(K);WA1.1(L)), identifié côté réception comme étant correct, de chaque couple de télégrammes (A1.1(K),A1.2(K);WA1.1(L),WA1.2(L)) déclenche, côté réception, un contrôle de temps (TUZ) pour une durée suivante maximale admissible entre les deux télégrammes de données d'un couple de télégrammes, contrôle qui rend l'identification et le contrôle du télégramme de données (A1.1(K),A1.2(K); WA1.1(L),WA1.2(L)), dans le calculateur de réception (T) et la délivrance d'une signalisation d'accusé de réception (Q1.1(K), Q1.2(K); Q1(eL)) dans le calculateur d'émission, dépendants de l'identification d'un second télégramme de données (A1.2(K); WA1.2(L)) de même contenu, dans l'autre canal (K2), durant l'intervalle de temps de contrôle (TUZ).

4. Procédé suivant les revendications 1 et 2, caractérisé par le fait que lors de la réception de signalisations d'accusé de réception (Q1.1(L), Q1.2(L)) dont le contenu est identique et qui sont protégés par une redondance d'ordre supérieur, dans les deux canaux (K1,K2) lors du trafic, le calculateur d'émission (S) réalise à nouveau une commutation en retour sur le trafic de données non protégées par une redondance d'ordre supérieur, au moins avec le calculateur de réception (E) qui transmet ces signalisations d'accusé de réception.

5. Procédé suivant la revendication 1, caractérisé par le fait que lors de la réception de télégrammes de données (WA1.1(L), WA1.2(L)), qui ont un même contenu et qui sont protégés par une redondance d'ordre supérieur, dans les deux canaux, le calculateur de réception (E) déclenche l'envoi de l'accusé de réception, dans les deux canaux, de ces télégrammes de données au calculateur d'émission (S), qui empêche cependant le transfert des télégrammes de données après leur évaluation, dans la mesure où les contenus de ces télégrammes de données coïncident avec les télégrammes de données (A1.1(K), A1.2(K)) qui ont été transmis auparavant et ne sont pas protégés par une redondance d'ordre supérieur.

6. Procédé suivant la revendication 5, caractérisé par le fait qu'aux télégrammes de données (WA1.1(L), WA1.2(L)), qui sont transmis à la suite de télégrammes de données (A1.1(K), A1.2(K)), qui ne sont pas protégés par une redondance d'ordre supérieur, et dont le contenu coïncide avec le contenu de ces télégrammes et qui sont protégés par une redondance d'ordre supérieur, est adjointe une caractérisation, qui permet, côté réception, de les distinguer par rapport aux télégrammes de données (A1.1(K),A1.2(K)), qui ont été transmis auparavant et ont des contenus identiques.

7. Procédé suivant les revendications 1 et 3, caractérisé par le fait que lors de la réception, dans deux canaux, de deux télégrammes de données (A2.1(K),A2.2(K)), qui possèdent le même contenu et qui ne sont pas protégés par une redondance d'ordre supérieur, le calculateur de réception (E) exécute à nouveau une commutation en retour sur le trafic de données non protégé par une redondance d'ordre supérieur et indique au calculateur d'émission (S) le transfert des télégrammes de données avec des signalisation d'accusé de réception (Q2.1(K),Q2.2(K)), qui ne sont pas protégés par une redondance d'ordre supérieur, au moyen des deux canaux (K1,K2).

8. Procédé suivant la revendication 1, caractérisé par le fait que le premier télégramme de données (A1.1(K); WA1.1(L)), qui est identifié comme correct côté réception, de chaque couple de télégrammes (A1.1(K),A1.2(K); WA1.1(L), WA1.2(L)), déclenche, côté réception, un contrôle de temps (TUZ) pour une durée suivante maximale admissible entre les deux télégrammes de données d'un couple de télégrammes, contrôle qui, lors de la réception exclusive d'un télégramme de données (WA1.1(L)) protégé par une redondance d'ordre supérieur à la suite de la réception d'un télégramme de données (A1.1(K)) dont le contenu est identique, mais qui n'est pas protégé par une redondance d'ordre supérieur, dans le même canal (K1) que celui au moyen duquel ce télégramme de données (A1.1(K)) a été transmis auparavant, déclenche, lors de son exécution, l'identification et le transfert du télégramme de données (WA1.1(L)), protégé par une redondance d'ordre supérieur, lorsque les conditions de contrôle prédéterminés sont respectées dans le calculateur de réception (E), et la délivrance d'une signalisation d'accusé de réception (Q1(eL)), dans le canal (K1) identifié comme non perturbé, au calculateur d'émission (S).

9. Procédé suivant la revendication 1, caractérisé par le fait que la première signalisation d'accusé de réception (Q1.1(K)), identifiée comme correcte côté émission, de chaque couple de signalisations d'accusé de réception (Q1.1(K), Q1.2(K)), déclenche, côté émission, un contrôle de temps (TUZ) pour une durée suivante maximale admissible entre les deux signalisations d'accusé de réception de chaque couple de signalisation d'accusé de réception, contrôle qui rend l'identification de la signalisation d'accusé de réception, dépendante de la réception d'une seconde signalisation d'accusé de réception de même contenu (Q1.2(K)) dans l'autre canal respectif (K2) au cours de la durée de contrôle.

10. Procédé suivant la revendication 1, 3 ou 6, caractérisé par le fait que la durée maximale prédéterminée par le contrôle de temps (QUZ) pour la réception d'une ou deux signalisation d'accusé de réception (Q1.1(K), Q1.2(K); Q1(eL)) est au moins aussi longue que la durée d'un télégramme, la durée qui est prédéterminée par le contrôle de temps (TUZ) pour la durée suivante maximale admissible de deux télégrammes de données (A1.1(K), A1.2(K); WA1.1(L), WA1.2(L)) d'un couple de télégrammes et de deux signalisations d'accusé de réception d'un couple de signalisations d'accusé de réception, et le double de la durée de propagation des télégrammes entre le calculateur d'émission et le calculateur de réception.
